(19) Europäisches Patentamt
European Patent Office
Office européen des brevets

(11) **EP 4 410 592 A1**

(12) **EUROPEAN PATENT APPLICATION**

(43) Date of publication:
**07.08.2024 Bulletin 2024/32**

(21) Application number: **24150175.8**

(22) Date of filing: **03.01.2024**

(51) International Patent Classification (IPC):
**B60N 2/00** *(2006.01)* **B60N 2/56** *(2006.01)*
**B60R 21/015** *(2006.01)*

(52) Cooperative Patent Classification (CPC):
**B60N 2/5685; B60N 2/003; B60R 21/01532;**
**B60R 21/0154;** B60N 2210/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.01.2023 PT 2023118490**

(71) Applicant: **Laboratorio Iberico Internacional de
Nanotecnologia LIN
4715-330 Braga (PT)**

(72) Inventor: **CADILHE MARQUES, CARLOS
ALBERTO
4705-573 BRAGA (PT)**

(74) Representative: **Patentree
Edificio Net
Rua de Salazares, 842
4149-002 Porto (PT)**

(54) **A COMBINED HEATING AND OCCUPANT DETERMINATION DEVICE FOR DETECTING OR MONITORING A SEAT OCCUPANT AND THEIR USES**

(57) The present invention relates to a combined heating and occupant determination device for detecting or monitoring a seat occupant and their uses.

The device comprises a seat base part and a backrest part, wherein each part comprises an outer conductive layer (2) for facing the occupant and an inner conductive layer (1) for electromagnetically shielding the outer conductive layer, i.e. acting as an electrostatic shield for the outer conductive layer, wherein the device further comprises an electronic circuit comprising an electric or electromagnetic field generator connected to the outer conductive layer (2) of a first of said parts and an electric or electromagnetic field detector connected to the outer conductive layer (2) of a second of said parts and arranged for detecting or monitoring a seat occupant between the seat base part and the backrest part, wherein the electronic circuit is arranged to maintain a constant potential at the inner conductive layers (1) of said parts and wherein one or both of the inner conductive layers of said parts is/are configured for resistive heating.

**Fig. 5**

## Description

### TECHNICAL FIELD

The present disclosure relates to a combined heating and occupant determination device for detecting or monitoring a seat occupant and their uses.

### BACKGROUND

A capacitive sensor, also called as electric field sensor or proximity sensor, designates a sensor, which generates a signal responsive to the influence of what is being sensed, either is for example, a person, a part of a person's body, a pet, an object, or other, upon an electric field. A capacitive sensor generally comprises at least one antenna electrode, to which is applied an oscillating electric signal and which thereupon emits an electric field into a region of space proximate to the antenna electrode, while the sensor is operating. The sensor comprises at least one sensing electrode at which the influence of an object or living being on the electric field is detected. In some, also-called "loading mode", capacitive occupancy sensors, the one or more antenna electrodes serve at the same time as sensing electrodes. In this case, the measurement circuit determines the current flowing into the one or more antenna electrodes in response to an oscillating voltage being applied to them. The relationship of voltage to current yields the complex impedance of the one or more antenna electrodes. In an alternative version of capacitive sensors, the so-called "coupling mode" capacitive sensors, the transmitting antenna electrode(s) and the sensing electrode(s) are separate from one another. In this case, the measurement circuit determines the current or voltage that is induced in the sensing electrode when the transmitting antenna electrode is operating.

Nowadays, the methods for combining heating and capacitive sensing are just deployed in the seat, living the backrest usually unused. Such methods can be categorized according two basic principles: a) using the heater itself as the sensing electrode (more common); b) using dedicated sensing electrodes [1, 2, 3, 4, 5].

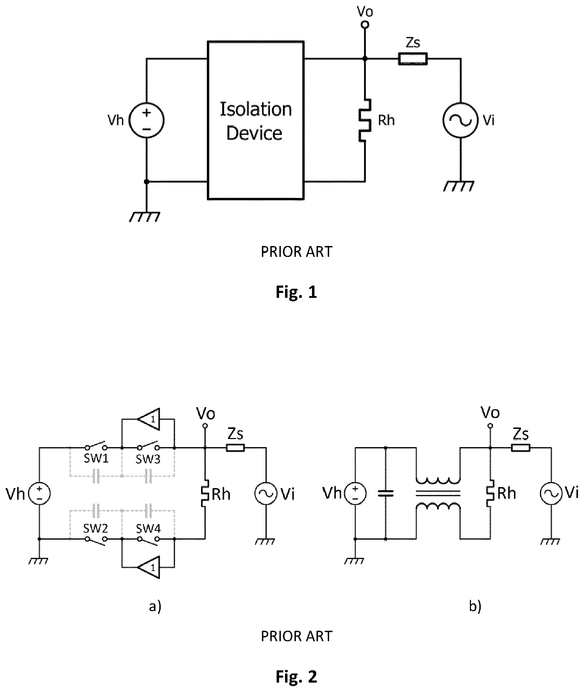

When the heater itself is used as the sensing electrode, the heater forms one plate of the sensing capacitor, being the other the human body itself, which is assumed to be grounded. For monitoring the sensing capacitor, an AC test signal Vi is applied to the voltage divider formed by the series impedance Zs and the heater (Rh), which can be faced as a capacitor to ground. The output of the sensor is the output of this voltage divider (Vo). Moreover, some kind of isolation device is needed between the heater DC power source (Vh) and the heater, to avoid shunting the sensor output Vo, as illustrated in Figure 1. Ideally, the isolation device behaves as a short-circuit in the heating mode, and as an open-circuit in the sensing mode.

Usually, there are two basic ways of implementing the isolation device [1, 2, 3, 4, 5]. In one option, as illustrated in Figure 2a), isolation is achieved by continuously alternating in time between heating and sensing modes. Such time-multiplexing action is performed by the electronic switches SW1-4, which are all closed in the heating mode, and all opened in the sensing mode. The switches are usually implemented by power MOSFETs, which have considerable parasitic capacitances, as represented by the dashed capacitors in Figure 2a). These capacitances can pass some leakage AC currents, compromising the isolation effect in the sensing mode. To counteract this, the leakage currents are minimized by bootstrapping SW3 and SW4 with unity-gain buffers; SW1 and SW2 are used just to avoid shorting the output of the buffers to Vh. In the heating mode, such short-circuit is avoided by disabling the output of the buffers [1, 2].

In other alternative option, illustrated in Figure 2b), the isolation device is often implemented by frequency-selective components, with the advantage of enabling the simultaneous action of the heating and sensing subsystems. In this case, the isolation device is some kind of low-pass filter, usually implemented by a common-mode choke. The filter can be made of several series sections, for increasing its order, thus achieving a higher rejection [3, 4, 5].

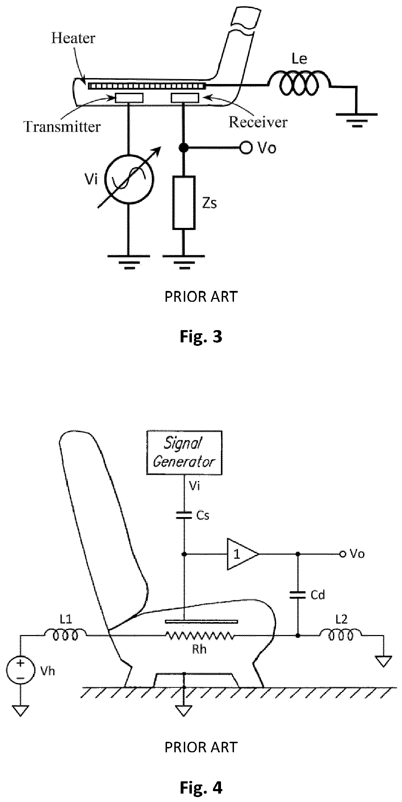

In [6], two additional electrodes were placed below the heater, one working as a transmitter, and the other as a receiver. As represented in Figure 3, the inductor Le represents the equivalent inductance of a common mode isolation choke, used for allowing the heater to float at AC. Effectively, without this choke, the heater would work as a shield, making occupant detection very difficult. The measurement process is quite involved: the inductance Le, together with all the inter-electrode capacitances of the seat, forms an equivalent parallel LC circuit. The frequency of measurement is set to the resonant frequency of the LC circuit under the empty-seat condition, for maximizing Vo. The presence of an occupant changes the inter-electrode capacitances, shifting the resonant frequency of the LC circuit. The inductors L1 and L2 allow the heater to float at AC, noting that these inductors can be combined in a common-mode choke, as before. The heater is supplied by the DC power source Vh. In other embodiments, the power inductors L1 and L2 are avoided by adding extra electrodes to the seat, which work as driven-shields, leaving the heater unused for capacitive sensing. Consequently, there is a noticeable drop of Vo, which can be easily detected.

In document US6703845B2, a dedicated sensing electrode was inserted above the heater Rh, forming one plate of the sensing capacitor; the other plate includes the human body, which is assumed to be grounded. The output of the voltage divider formed by the series capacitor Cs and the sensing capacitor is buffered and applied to the heater through the decoupling capacitor Cd, making the heater to work as a driven shield. The goal is bootstrapping the capacitance between the sensing electrode and the heater, minimizing its shunt effect on the sensing capacitor, thus increasing sensor sensitivity. The output of the sensor is the buffered output Vo.

These facts are described to illustrate the technical problem solved by the embodiments of the present document.

## GENERAL DESCRIPTION

The present disclosure relates to a combined heating and occupant determination device for detecting or monitoring a seat occupant and their uses.

The subject-matter of the disclosure relates to a combined heating and occupant determination device for detecting or monitoring a seat occupant comprising a seat base part and a backrest part, wherein each part comprises an outer conductive layer for facing the occupant and an inner conductive layer for electromagnetically shielding the first conductive layer, i.e. acting as an electrostatic shield of the first conductive layer, wherein the device further comprises an electronic circuit comprising an electric (or electromagnetic) field generator connected to the outer conductive layer of a first of said parts and an electric (or electromagnetic) field detector connected to the outer conductive layer of a second of said parts and arranged for detecting or monitoring a seat occupant between the seat base part and the backrest part, wherein the electronic circuit is arranged to maintain a constant potential at the inner conductive layers of said parts and wherein one or both of the inner conductive layers of said parts is configured for resistive heating.

This new heating and occupant determination device for detecting or monitoring a seat occupant is developed with the aim of developing a new device that would dismiss big and expensive power components, such as inductors, electronic switches, among others. In an embodiment, this new device can be introduced to any pre-existing seat used in the transport sector, such, for example, in a car, in an airplane, in a train or in a boat, and in the furniture sector as well, for example, in a chair or a couch.

The subject matter of the disclosure also provides advantageous of giving a directional characteristic to the sensor, since the inner conductive layer is at a constant potential, grounded at AC, working effectively as an electrostatic shield, preventing the influence of conductive bodies outside the sensing region.

An aspect of the disclosure comprises a combined heating and occupant determination device for detecting or monitoring a seat occupant, comprising a seat base part and a backrest part, wherein each part comprises an outer conductive layer for facing the occupant, an inner conductive layer for electromagnetically shielding the first conductive layer, i.e. acting as an electrostatic shield of the first conductive layer, wherein the device further comprises an electronic circuit comprising an electric (or electromagnetic) field generator connected to the outer conductive layer of a first of said parts and an electric (or electromagnetic) field detector connected to the outer conductive layer of a second of said parts and arranged for detecting or monitoring a seat occupant between the seat base part and the backrest part, wherein the electronic circuit is arranged to maintain a constant potential at the inner conductive layers of said parts and wherein one or both of the inner conductive layers of said parts is configured for resistive heating.

In an embodiment, the electric (or electromagnetic) field generator of the device is an alternating-current signal generator.

In an embodiment, each part of the device comprises an insulating spacer between the outer conductive layer and the inner conductive layer.

In an embodiment, the outer conductive layers of the device are capacitively coupled, the field generator is an electric field generator and the field detector is an electric field detector.

In an embodiment, the field generator of the device is an electromagnetic field generator and the field detector is an electromagnetic field detector, in particular the field generator and the field detector are antennas.

In an embodiment, the electric field detector of the device is a capacitive sensor or a capacitance threshold detector.

In an embodiment, the backrest part of the device is the second of said parts and the seat base part is the first of said parts.

In an embodiment, the electronic circuit of the device comprises a heating power source connected to each of the inner conductive layers of said parts.

In an embodiment, the heating power source of the device is a direct-current power source.

In an embodiment, the direct-current power source of the device is a vehicle power supply.

In an embodiment, the device comprises an external covering layer.

In an embodiment, the conductive layers of the device are a conductive fabric or are embedded in an insulating fabric.

In an embodiment, the device further comprises at least one insulating fabric layer or insulating polymeric layer between the outer conductive layer and the inner conductive layer.

In an embodiment, the insulating fabric of the device is selected from a list consisting of a woven fabric, non-woven fabric, knitted fabric, or their combinations thereof.

In an embodiment, the layers of the device are comprised in an insulating encapsulation foam.

In an embodiment, one or more of the conductive layers of the device comprise a conductive fabric, wire, pad, or a combination of these.

In an embodiment, a surface area of the inner conductive layer of the device is larger than a surface area of the outer conductive layer.

In an embodiment, the inner conductive layer of the device extends beyond a periphery of the outer conductive layer.

Furthermore, this disclosure also concerns a vehicle seat or a chair comprising the disclosed occupant determination device for detecting or monitoring a seat occupant and/or a combined heating and occupant determination device.

## BRIEF DESCRIPTION OF THE DRAWINGS

The following figures provide preferred embodiments for illustrating the disclosure and should not be seen as limiting the scope of invention.

**Figure 1:** Schematic representation of a heater as the sensing electrode, as known in the prior art.

**Figure 2:** Schematic representation of two typical implementations of the isolation device, as known in the prior art. It is illustrated an isolation with bootstrapped switches (a) and isolation with frequency-selective components (b).

**Figure 3:** Schematic representation of an embodiment known from the prior art where there are sensing electrodes below the heater.

**Figure 4:** Schematic representation of an embodiment known from the prior art where there are sensing electrodes above the heater.

**Figure 5:** Schematic representation of a combined heating and occupant determination device for detecting or monitoring a seat occupant.

**Figure 6:** Schematic representation of the occupant determination subsystem and its equivalent circuit.

**Figure 7:** Schematic representation of a three-dimensional view of an occupant determination device for detecting or monitoring a seat occupant.

Throughout the figures indicated above, the following elements are indicated with the respective references:

1 - Inner conductive layer;
2 - Outer conductive layer;
3 - Seat.

## DETAILED DESCRIPTION

This disclosure relates to a combined heating and occupant determination device for detecting or monitoring a seat occupant and their uses.

The subject-matter of the disclosure relates to a combined heating and occupant determination device for detecting or monitoring a seat occupant comprising a seat base part and a backrest part, wherein each part comprises an outer conductive layer for facing the occupant and an inner conductive layer for electromagnetically shielding the outer conductive layer, i.e. acting as an electrostatic shield of the outer conductive layer, wherein the device further comprises an electronic circuit comprising an electric (or electromagnetic) field generator connected to the outer layer of a first of said parts and an electric (or electromagnetic) field detector connected to the outer layer of a second of said parts and arranged for detecting or monitoring a seat occupant between the seat base part and the backrest part, wherein the electronic circuit is arranged to maintain a constant potential at the inner conductive layers of said parts and wherein one or both of the inner conductive layers of said parts is configured for resistive heating.

In an embodiment, the electric (or electromagnetic) field generator of the device is an alternating-current signal generator, allowing a simpler and better electromagnetic field detector.

The fact that the electronic circuit of the device is arranged to maintain the inner conductive layers at a constant potential gives a directional characteristic to the sensor and prevents the influence of conductive bodies outside the sensing region.

In an embodiment, each part of the device comprises an insulating spacer between the outer conductive layer and the inner conductive layer, to prevent any conduction leakage current between said layers.

In an embodiment, the outer conductive layers of the device are capacitively coupled, the field generator is an electric field generator and the field detector is an electric field detector for better results.

In an embodiment, the field generator of the device is an electromagnetic field generator and the field detector is an electromagnetic field detector, in particular the field generator and the field detector are antennas.

In an embodiment, the electric field detector of the device is a capacitive sensor or a capacitance threshold detector, for a better and more accurate detection.

In an embodiment, the seat base part of the device is the second of said parts and the backrest part is the first of said parts, for better results in some situations.

In an embodiment, the electronic circuit of the device comprises a heating power source connected to each of the inner conductive layers of said parts, will stand out as one possible embodiment of the combined heating and occupant determination device.

In an embodiment, the heating power source of the device is a direct-current power source, for better shielding effect and reduced electromagnetic interference.

In a more specific embodiment, the direct-current power source of the device is a vehicle power supply.

In an embodiment, the device comprises an external insulating covering layer, for protection against any unwanted disturbance in the signal.

In an embodiment, the conductive layers of the device are a conductive fabric or are embedded in an insulating fabric, for better results and more comfortable aspect to the user.

In an embodiment, the device further comprises at least one insulating fabric layer or insulating polymeric layer between the outer conductive layer and the inner conductive layer, which helps on the spacer between said layers. In an embodiment, the insulating fabric of the device is selected from a list consisting of a woven fabric, non-woven fabric, knitted fabric, or their combinations thereof, for better results.

In an embodiment, the layers of the device are comprised in an encapsulation foam, for protection against disturbances provided by something external to the device.

In an embodiment, one or more of the conductive layers of the device comprise a conductive fabric, wire, pad, or a combination of these, for better results.

In an embodiment, a surface area of the inner conductive layer of the device is larger than a surface area of the outer conductive layer, for better shielding effect and increased detection directionality. In an embodiment, the inner conductive layer of the device extends beyond a periphery of the outer conductive layer, for even better results.

This disclosure also discloses the use of this devices in a vehicle seat or a chair, with or without heating purposes. The device can also be used, for example, to posture analysis, massage and lumbar support systems, among other suitable uses.

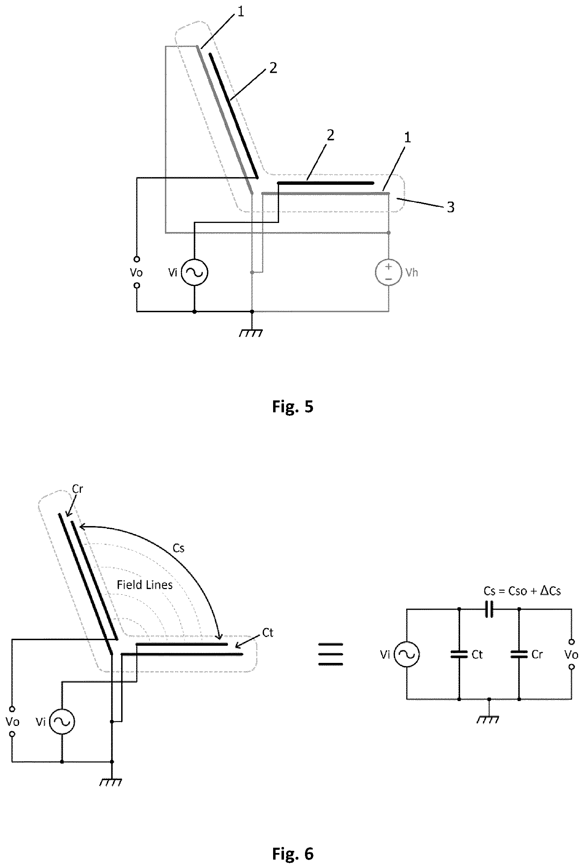

In an embodiment illustrated in figure 5, it is possible to see a schematic representation of a seat having a seat base part and a backrest part, wherein both, outer and inner conductive layers make a similar electrode structure. Each part, i.e. the seat base part and the backrest part, comprises an outer conductive layer (2) for facing the occupant and an inner conductive layer (1) for electromagnetically shielding the outer conductive layer.

In an embodiment, both outer conductive layer (2), i.e., the conductive layer (2) in the backrest part and the one in the seat base part, are placed above the inner conductive layer (1), which is directly fed by a DC power source Vh, thus working as heating resistors. As these layers (1) are always at a constant potential, grounded at AC, they work effectively as electrostatic shields, preventing the influence of conductive bodies outside the sensing region, giving a directional characteristic to the sensor, as illustrated in Figure 5.

In an embodiment, the superior performance of the outer conductive layer (2) on occupant detection compensates for the loss of sensitivity caused by the inner conductive layer (1), which works as a grounded shield. As so, no isolation device is necessary in the electronic circuit, i.e., no power components and no bootstrapping techniques are needed, resulting in a simple and economic system. Moreover, the heating, detection and monitoring subsystems can work simultaneously.

In an embodiment, besides increased simplicity, the inner conductive layer (1) has the advantage of reducing the generated Electromagnetic Interference (EMI), comparatively to the prior art.

In an embodiment, the action of the detection and monitoring subsystem is illustrated in Figure 6, which exposes the equivalent electric circuit. Three capacitances can be identified: Ct is the capacitance between the transmitting electrode and the shield; Cr is the capacitance between the receiving electrode and the shield; and Cs is the capacitance between the transmitting and the receiving electrodes, working as a sensing capacitor.

In an embodiment, the presence of an occupant increases Cs from its base value Cso by $\Delta$Cs, assuming that the occupant is ungrounded, so the occupant can float at AC. The sensing capacitor Cs is measured indirectly: an AC test signal Vi is injected on Ct, feeding the voltage divider formed by Cs and Cr. By measuring the output of the voltage divider (Vo), Cs can be calculated from Eq. 1 below. This expression assumes that Cr is known and constant, thus requiring it has a non-compressible dielectric. Alternatively, seat occupancy can be assessed just by measuring Vo, as Vi is constant. The waveform of Vi is preferably sinusoidal, for minimizing the generated EMI, but it can be any time-varying signal, depending on the particular measurement method employed.

$$C_S = \frac{C_r}{\frac{V_i}{V_0} - 1} \qquad (1)$$

In an embodiment, the conductive layers, working as electrodes, are just conductive surfaces, being usually made with some kind of conductive textile, such as a fabric or yarn. Nevertheless, any conductive material can be used, provided it does not affect seat comfort and safety. For maximum shielding performance, the inner conductive layer (1) surfaces should extend beyond the outer conductive layer (2) boundaries, as illustrated in Figures 5 and 6.

In an embodiment, the role of the electrodes can be swapped: the transmitter can be on the backrest, and the receiver can be on the seat. This is done by connecting Vi to the backrest electrode, and taking Vo from the seat base electrode.

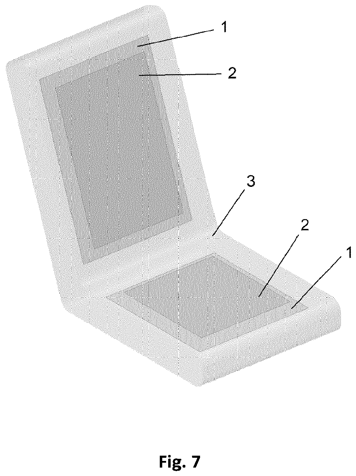

In an embodiment, illustrated in figure 7, the combined heating and occupant determination device for detecting or monitoring a seat occupant comprises a surface area of the inner conductive layer larger than the surface area of the outer conductive layer.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof.

The above described embodiments are combinable.

The following claims further set out particular embodiments of the disclosure.

## References

[1] K. Kincaid, R. Constable, D. Griffin; "Seat assembly having seat heating and occupant detection"; United States Patent application US 2009/0295199 A1, Delphi Technologies Inc., 2009.

[2] S. Koch, P. Maguire; "Capacitive sensing isolation using reversed biased diodes"; United States Patent US 7521940 B2, TK Holdings Inc., 2009.

[3] T. Fischer, L. Oel, G. Hofmann; "Seat occupant detection circuit isolation from seat heating circuit using a common mode choke"; United States Patent US 8500194 B2, Delphi Technologies Inc., 2013.

[4] M. Virnich et al.; "Capacitive sensing system able of using heating element as antenna electrode"; United States Patent US 9000331 B2, IEE International Electronics & Engineering S.A., 2015.

[5] L. Lamesch, A. Schoos; "Combined seat heater and capacitive occupancy sensor"; United States Patent US 9006618 B2, IEE International Electronics & Engineering S.A., 2015.

[6] B. George et al.; "A Method for Seat Occupancy Detection for Automobile Seats with Integrated Heating Elements"; XIX IMEKO World Congress Fundamental and Applied Metrology, 6-11 September, 2009.

## Claims

1. A combined heating and occupant determination device for detecting or monitoring a seat occupant, comprising a seat base part and a backrest part, wherein each part comprises:

   an outer conductive layer for facing the occupant,
   an inner conductive layer for electromagnetically shielding the outer conductive layer;

   wherein the device further comprises an electronic circuit comprising:

   an electric or electromagnetic field generator connected to the outer layer of a first of said parts;
   an electric or electromagnetic field detector connected to the outer layer of a second of said parts and arranged for detecting or monitoring a seat occupant between the seat base part and the backrest part;
   wherein the electronic circuit is arranged to maintain a constant potential at the inner conductive layers of said parts;
   wherein one or both of the inner conductive layers of said parts is configured for resistive heating.

2. The device according to the previous claim wherein the electric or electromagnetic field generator is an alternating-current signal generator.

3. The device according to any of the previous claims wherein each part comprises an insulating spacer between the outer conductive layer and the inner conductive layer.

4. The device according to any of the previous claims wherein the outer conductive layers are capacitively coupled, the field generator is an electric field generator and the field detector is an electric field detector, preferably a capacitive sensor or a capacitance threshold detector, or the field detector is an electromagnetic field detector, in particular the field generator and the field detector are antennas.

5. The device according to any of the previous claims, wherein the seat base part is the second of said parts and the backrest part is the first of said parts.

6. The device according to any of the previous claims, wherein the electronic circuit comprises a heating power source connected to each of the inner conductive layers of said parts.

7. The device according to the previous claim wherein the heating power source is a direct-current power source, preferably a vehicle power supply, in particular a vehicle battery.

8. The device according to any of the previous claims, comprising an external insulating covering layer.

9. The device according to any of the previous claims, wherein the conductive layers are a conductive fabric or are embedded in a fabric, preferably wherein one or more of the conductive layers comprise conductive fabric, wire, pad, or a combination of these.

10. The device according to any of the previous claims, further comprising at least one insulating fabric layer or insulating polymeric layer between the outer conductive layer and the inner conductive layer, in particular the insulating fabric being selected from a list consisting of a woven fabric, non-woven fabric, knitted fabric, or their combinations thereof.

11. The device according to any of the previous claims wherein said layers are comprised in an insulating encapsulation foam.

12. The device according to any of the previous claims wherein a surface area of the inner conductive layer is larger than the surface area of the outer conductive layer.

13. The device according to the previous claim wherein the inner conductive layer extends beyond the periphery of the outer conductive layer.

14. A vehicle seat comprising the device of any of the previous claims.

15. A chair comprising the device of any of the previous claims 1 to 13.

PRIOR ART

**Fig. 1**

a)                                        b)

PRIOR ART

**Fig. 2**

Heater

Le

Transmitter

Receiver

Vi

Vo

Zs

PRIOR ART

**Fig. 3**

Signal
Generator

Vi

Cs

1

Vo

Cd

L1

L2

Rh

Vh

PRIOR ART

**Fig. 4**

**Fig. 5**

$$Cs = Cso + \Delta Cs$$

**Fig. 6**

**Fig. 7**

Europäisches
Patentamt

European
Patent Office

Office européen
des brevets

**EUROPEAN SEARCH REPORT**

Application Number

EP 24 15 0175

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 090 460 A1 (IEE SARL [LU]) 19 August 2009 (2009-08-19) * paragraphs [0012] - [0032]; figures 1-8 * | 1-15 | INV. B60N2/00 B60N2/56 B60R21/015 |
| | ----- | | |
| A | DE 10 2018 124580 A1 (FAURECIA AUTOMOTIVE SEATING LLC [US]) 11 April 2019 (2019-04-11) * paragraphs [0024] - [0034]; figures 1-5 * | 1-15 | |
| | ----- | | |

TECHNICAL FIELDS
SEARCHED       (IPC)

B60N
B60R

The present search report has been drawn up for all claims

| Place of search | Date of completion of the search | Examiner |
|---|---|---|
| Munich | 14 June 2024 | Lotz, Klaus-Dieter |

EPO FORM 1503 03.82 (P04C01)

## ANNEX TO THE EUROPEAN SEARCH REPORT
## ON EUROPEAN PATENT APPLICATION NO.

EP 24 15 0175

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | Publication date | Patent family member(s) | Publication date |
|---|---|---|---|
| EP 2090460 A1 | 19-08-2009 | EP 2090460 A1<br>WO 2009100980 A1 | 19-08-2009<br>20-08-2009 |
| DE 102018124580 A1 | 11-04-2019 | DE 102018124580 A1<br>US 2019107641 A1 | 11-04-2019<br>11-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6703845 B2
- US 20090295199 A1, K. Kincaid, R. Constable, D. Griffin;
- US 7521940 B2, S. Koch, P. Maguire
- US 8500194 B2, T. Fischer, L. Oel, G. Hofmann
- US 9000331 B2, M. Virnich
- US 9006618 B2, L. Lamesch, A. Schoos

**Non-patent literature cited in the description**

- **B. GEORGE et al.** A Method for Seat Occupancy Detection for Automobile Seats with Integrated Heating Elements. *XIX IMEKO World Congress Fundamental and Applied Metrology,* 06 September 2009